# EUROPÄISCHE PATENTSCHRIFT

(11) **EP 1 134 237 B1**
(45) Veröffentlichungstag und Bekanntmachung des Hinweises auf die Patenterteilung: **25.09.2002**
(21) Anmeldenummer: 01106117.3
(22) Anmeldetag: 13.03.2001
(51) Int. Cl.: C08F 10/02, C08F 4/38

(54) **Verfahren zur Herstellung von Polyethylenwachsen**
Process for the preparation of polyethylene waxes
Procédé de préparation des cires de polyéthylène

(30) Priorität: 16.03.2000 DE 10012775
(43) Veröffentlichungstag der Anmeldung: 19.09.2001
(73) Patentinhaber: BASF AKTIENGESELLSCHAFT, 67056 Ludwigshafen (DE)
(72) Erfinder: Deckers, Andreas, Dr., 55234 Flomborn (DE); Weber, Wilhelm, Dr., 67435 Neustadt (DE); Mähling, Frank-Olaf, Dr., 68167 Mannheim (DE); Wittkowski, Lars, Dr., 68167 Mannheim (DE)

(56) Entgegenhaltungen:
- EP-B- 0 813 550
- GB-A- 1 058 967

## Beschreibung

Die vorliegende Erfindung betrifft Verfahren zur Herstellung von Polyethylenwachsen bei Temperaturen von 200 bis 350°C und Drucken im Bereich von 500 bis 4000 bar unter Verwendung von Molmassenreglern, dadurch gekennzeichnet, dass man als Radikalstarter ein Peroxidgemisch einsetzt, das im Bereich von 5 bis 95 Gew.-% mindestens eines cyclischen Peroxids der Formel I enthält, 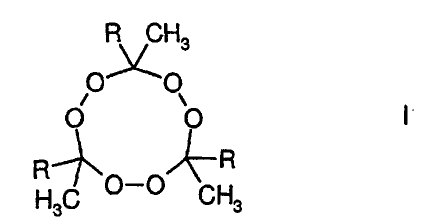 wobei die Reste R gleich oder verschieden sind und aus Alkylgruppen oder Arylgruppen ausgewählt werden, und dass man ferner ein molares H₂/Ethylen-Verhältnis von 1:2000 bis 1:40000 einsetzt.

Die Herstellung von Homopolymerisaten und Copolymerisaten des Ethylens im Hochdruckverfahren ist ein industriell in großem Maßstab durchgeführter Prozess. In diesen Verfahren werden Drücke oberhalb von 500 bar und Temperaturen von 150°C und höher verwendet. Das Verfahren wird generell in Hochdruckautoklaven oder in Rohrreaktoren durchgeführt. Hochdruckautoklaven sind in sogenannten gedrungenen oder langgestreckten Ausführungsformen bekannt. Die bekannten Rohrreaktoren (*Ullmanns Encyclopädie der technischen Chemie,* Band 19, S. 169 und S. 173 ff **(1980)**, Verlag Chemie Weinheim, Deerfield Beach, Basel sowie *Ullmann's Encyclopädie der technischen Chemie*, 4. Auflage, Stichworte: Wachse, Bd. 24, S. 36 ff., Thieme Verlag Stuttgart, **1977**) zeichnen sich durch einfache Handhabung und geringe Wartung aus und sind gegenüber gerührten Autoklaven von Vorteil. Die in den oben genannten Apparaturen erreichbaren Umsätze sind jedoch begrenzt und überschreiten 30% im Allgemeinen nicht.

Um die Kapazität der vorhandenen Apparaturen zu erhöhen, ist man bestrebt, möglichst hohe Umsätze zu verwirklichen. Limitierend sind jedoch Polymerisationstemperatur und Polymerisationsdruck, die je nach Produkttyp eine spezifische Obergrenze haben. Für niederdichte LDPE-Wachse beträgt diese Obergrenze ca. 330°C; oberhalb davon kann es zu spontanen Ethylen-Zersetzungen kommen. Weiterhin ist man bestrebt, die Wärmeabfuhr durch eine möglichst tiefe Manteltemperatur zu verbessern. Unterhalb einer Temperatur von 150°C kann es jedoch durch die Bildung laminarer Polyethylenschichten, die als Isolator wirken können, zu Wärmeabfuhrproblemen kommen. Weiterhin ist der auftretende Druckverlust limitierend; dieser Druckverlust nimmt mit sinkender Temperatur zu.

Durch die Wahl des Radikalstarters lässt sich der Umsatz in gewissen Grenzen erhöhen. Gewünscht sind Radikalstarter, die schnell zerfallen, aber sich dennoch sicher handhaben lassen. Eine gute Methode, die Zerfallsgeschwindigkeit eines Radikalstarters im Hochdruckprozess zu prüfen, ist eine Aufnahme des Temperaturprofils. Bei der Polymerisation im Hochdruckrohrreaktor wird dazu das Temperaturprofil über die Reaktorlänge aufgetragen. Unmittelbar nach der ersten Dosierung des Initiators steigt die Temperatur aufgrund der frei werdenden Polymerisationsreaktions-Enthalpie steil an, um danach wieder abzusinken. Am Temperatur-Minimum Tₘᵢₙ wird erneut Initiator dosiert, die Temperatur steigt wiederum steil an und sinkt danach wieder ab. Am nächsten Temperatur-Minimum wird wiederum Initiator dosiert. Je größer die Temperaturdifferenz zwischen Temperaturmaximum und Minimum, desto höher ist der Umsatz. Entscheidendes Anzeichen für das vollständige Abreagieren eines Peroxids ist dabei die sogenannte Abkühlkurve, die bei vollständigem Zerfall steiler verläuft als in den Fällen, in denen Anteile des Peroxids auch nach der eigentlichen Reaktionszone in der Reaktionsmischung verbleiben.

Dabei wird die Reaktion im Allgemeinen so geführt, dass zunächst am Startpunkt, das heißt zu Beginn des Reaktors, mehrere Peroxide dosiert werden, von denen mindestens eines bei vergleichsweise niedriger Temperatur zerfällt.

Aus verschiedenen Gründen wäre es wünschenswert, an möglichst vielen Stellen Initiator zu dosieren; jedoch sind aufgrund des hohen Preises der Pumpen, die an jeder Dosierstelle notwendig sind, der Anzahl von Dosierungen wirtschaftliche und technische Grenzen gesetzt.

Aus EP-B 0 813 550 geht hervor, dass cyclische Peroxoverbindungen der allgemeinen Formeln P¹ bis P³ verwendet werden können, um im Hochdruckprozess Ethylen zu polymerisieren.

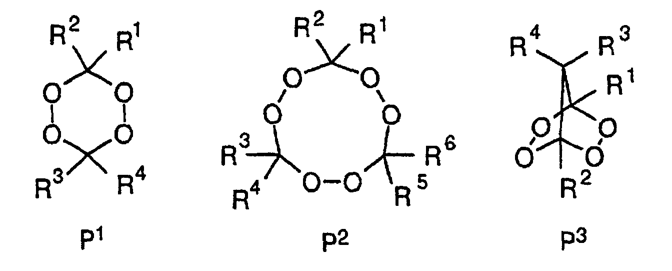

Es hat sich aber gezeigt, dass der Umsatz bei der Verwendung der wichtigsten konventionellen Radikalstarter immer noch zu gering ist. Als die wichtigsten konventionellen Radikalstarter sind Dibenzoylperoxid, Di-tert.-butylperoxid, tert.-Butylperpivalat ("TBPP") und tert.-Butylperisononanoat ("TBPIN") zu nennen. Bei zu geringem Umsatz wird die Wirtschaftlichkeit des Hochdruckprozesses beeinträchtigt. Auch die Umsätze bei Verwendung der Peroxide der allgemeinen Formeln P¹ bis P³ sind noch zu gering.

Durch Regler wie beispielsweise Aldehyde, Ketone oder Wasserstoff lässt sich im Hochdruckprozess das Molekulargewicht des Produkts beeinflussen; ein Einfluss auf den Umsatz ist bei der Verwendung von konventionellen Peroxiden jedoch nicht nachgewiesen worden (GB 1,058,967).

Deshalb bestand die Aufgabe, ein Verfahren bereitzustellen, durch das der Umsatz bei der Hochdruckpolymerisation von Ethylen weiter erhöht wird.

Es wurde nun gefunden, dass man bei der Herstellung von Polyethylenwachsen im Hochdruckverfahren durch Verwendung von Mischungen konventioneller Peroxide mit 5 bis 95 Gew.-% kommerziellen cyclischen Peroxoverbindungen der allgemeinen Formel I höhere Umsätze als bisher üblich erzielen kann, wenn man zur weiteren Erhöhung des Umsatzes ein molares H₂/Ethylen-Verhältnis von 1:2000 bis 1:40000 einsetzt.

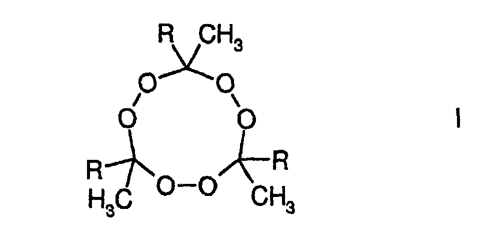

Dabei sind die Reste R gleich oder verschieden und ausgewählt aus
- C₁-C₈-Alkyl wie Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, iso-Hexyl, sec.-Hexyl, n-Heptyl, n-Octyl; bevorzugt lineares C₁-C₆-Alkyl wie Methyl, Ethyl, n-Propyl, n-Butyl, n-Pentyl, n-Hexyl, besonders bevorzugt lineares C₁-C₄-Alkyl wie Methyl, Ethyl, n-Propyl oder n-Butyl, ganz besonders bevorzugt ist Ethyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;

Die Darstellung derartiger trimerer Ketonperoxide gelingt durch Kondensation der entsprechenden Ketone mit Wasserstoffperoxid in Gegenwart starker Mineralsäuren und ist in der Literatur beschrieben (beispielsweise R. Criegee, in *Methoden der Organischen Chemie* (Houben-Weyl), Bd. 8, S. 46, Georg-Thieme-Verlag Stuttgart **1952** oder in EP-A 0 813 550).

Die Mischungen der Peroxide werden üblicherweise so festgelegt, dass sie einerseits mindestens ein sogenanntes hochzerfallendes Peroxid, das auch "Hochzerfaller" genannt wird, weil es erst bei relativ hohen Temperaturen zerfällt und andererseits mindestens ein sogenanntes mittelzerfallendes Peroxid enthalten, das auch als "Mittelzerfaller" bezeichnet wird, weil es bei mittelhohen Temperaturen zerfällt.

Die Unterscheidung zwischen Hochzerfallern und Mittelzerfallern erfolgt mit Hilfe der Temperaturen, bei denen die Halbwertszeiten t_{½} für den Zerfall 10, 1 oder 0,1 Stunden bestimmt werden, am gebräuchlichsten wird die Halbwertszeit bei 0,1 Stunden angegeben.

Mittelzerfaller haben eine Halbwertszeit von 0,1 Stunden bei Temperaturen von 100 bis 140°C.

Hochzerfaller haben eine Halbwertszeit von 0,1 Stunden bei Temperaturen über 140°C.

Peroxide sind in großer Auswahl kommerziell erhältlich, beispielsweise die Trigonox® oder Perkadox®-Marken der Akzo Nobel.

Beispiele für kommerziell erhältliche Mittelzerfaller sind:

Didecanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.Butylperoxydiethylacetat, tert.Butylperoxydiethylisobutyrat, 1,4-Di(tert.-butylperoxycarbo)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperoxy)butan oder tert.-Butylperoxacetat.

Beispiele für konventionelle kommerziell erhältliche Hochzerfaller sind: tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.butylperoxid, 1,3-Diisopropylmonohydroperoxid, Cumolhydroperoxid oder tert.-Butylhydroperoxid.

Die trimeren Ketonperoxide der allgemeinen Formel I sind als Hochzerfaller einzuordnen.

Die Halbwertszeiten von Peroxiden werden üblicherweise nach einer allgemein verwendeten Labormethode bestimmt:

Zunächst werden mehrere Ampullen oder Reagenzgläser mit einer verdünnten Lösung der Konzentration c₀ mit weniger als 0,2 mol/l, bevorzugt weniger als 0,1 mol/l des zu untersuchenden Peroxids hergestellt, wobei als Lösemittel ein inertes, d.h.- ein nicht mit Peroxide reagierendes Lösemittel gewählt wird; bevorzugt sind Benzol, Toluol oder Chlorbenzol.

Diese Ampullen werden bei einer definierten Temperatur thermostatisiert. In definierten Zeitabständen, z.B. 1, 2, 3, 4, 6, 8 Stunden wird je eine Ampulle entnommen, schnell abgekühlt und dann auf den Restperoxidgehalt cₜ untersucht. Diese Untersuchung erfolgt vorzugsweise titrimetrisch. Die Auswertung erfolgt graphisch. Trägt man die relative Konzentration logarithmisch gegen die Reaktionszeit auf, so lässt sich die Halbwertszeit bei cₜ/c₀ = 0,5 an der Ordinate ablesen.

Zur Bestimmung der Temperaturabhängigkeit wird diese Messung bei verschiedenen Temperaturen wiederholt.

Die als Radikalstarter erfindungsgemäß verwendeten Mischungen enthalten
- 5 bis 95 Gew.-% eines oder mehrerer trimerer Ketonperoxide als Hochzerfaller, bevorzugt 10 bis 75 Gew.-% und besonders bevorzugt 20 bis 66 Gew.-%; und normalerweise
- 5 bis 95 Gew.-% eines oder mehrerer konventioneller Peroxide als Mittelzerfaller, bevorzugt 25 bis 90 Gew.-% und besonders bevorzugt 34 bis 80 Gew.-%.

Die Dosierung der im reinen Zustand äußerst stoß- und schlagempfindichen Peroxide erfolgt vorteilhaft als Lösung in Kohlenwasserstoffen, wobei Isododekan als Lösemittel beispielhaft zu nennen ist. Die Lösungen enthalten die Peroxidmischungen in Anteilen von 5 bis 60 Gew.-%, bevorzugt von 15 bis 40 Gew.-%.

Wesentlich ist, dass das Gemisch der Peroxide in Gegenwart von Wasserstoff dosiert wird, wobei man zur weiteren Erhöhung des Umsatzes ein molares H₂/Ethylen-Verhältnis von 1:2000 bis 1:40000 einsetzt. Durch diese Vorgehensweise wird der Umsatz an Ethylen signifikant erhöht. Das ist insofern überraschend, als dass für Wasserstoff bei der radikalischen Ethylenpolymerisation nur Molmassen-regelnde Funktionen bekannt sind.

Die Ethylenpolymerisation erfolgt bei Drücken von 500 bis 4000 bar, bevorzugt 1000 bis 3500 bar.

Die Reaktionstemperatur beträgt 150 bis 350°C, bevorzugt sind 160 bis 320°C.

Als Monomer bei dem erfindungsgemäßen Polymerisationsverfahren ist Ethylen besonders geeignet. Es lassen sich auch Copolymerisate mit Ethylen herstellen, wobei prinzipiell alle radikalisch mit Ethylen copolymerisierbaren Olefine als Comonomere geeignet sind. Bevorzugt sind
- 1-Olefine wie Propylen, 1-Buten, 1-Penten, 1-Hexen, 1-Octen und 1-Decen,
- Acrylate wie Acrylsäure, Acrylsäuremethylester, Acrylsäureethylester, Acrylsäure-n-butylester, Acrylsäure-2-ethylhexylester oder Acrylsäure-tert.-butylester;
- Methacrylsäure, Methacrylsäuremethylester, Methacrylsäureethylester, Methacrylsäure-n-butylester oder Methacrylsäuretert.-butylester;
- Vinylcarboxylate, wobei Vinylacetat besonders bevorzugt ist,
- Ungesättigte Dicarbonsäuren, besonders bevorzugt ist Maleinsäure,
- ungesättigte Dicarbonsäurederivate, besonders bevorzugt sind Maleinsäureanhydrid und Maleinsäurealkylimide wie beispielsweise Maleinsäuremethylimid.

Als weitere Molmassenregler sind aliphatische Aldehyde, Ketone, CH-acide Verbindungen wie Mercaptane oder Alkohole, Olefine und Alkane geeignet sowie Mischungen einer oder mehrerer Beispiele der verschiedenen Stoffklassen. Bevorzugt sind Aldehyde und Ketone.

Die durch das erfindungsgemäße Verfahren erhältlichen Wachse sind an sich bekannt. Sie haben Molmassen M_{w} unter 20000 g, bevorzugt unter 10000 g und besonders bevorzugt unter 7500 g.

Die Vorgehensweise wird an Arbeitsbeispielen erläutert.

### Arbeitsbeispiel

Die Polymerisation wurde in einem Hochdruckrohrreaktor durchgeführt, wie er in *Ullmanns Encyclopädie der technischen Chemie,* Band 19, S. 169 und S. 173 ff **(1980)**, beschrieben ist. Er hatte die folgenden Abmessungen: 400 m Länge, 32 mm Durchmesser. Folgende technische Daten kennzeichnen die Versuche:
Ethylendurchsatz 10 to/h
Druck 1900 bar

Als Regler wurde Propionaldehyd verwendet.
- Produkt:: M_{w} = 6300 g
Mₙ = 2100 g
Dichte = 0,918 g/cm³.
Viskosität bei 120°C = 1100 bis 1300 g/mol

Die Ergebnisse gehen aus Tabelle 1 hervor.

In den erfindungsgemäßen Beispielen 1 und 2 wurde jeweils mit einem Gemisch von Peroxiden gearbeitet, das 3,6,9-Trimethyl-3,6,9-triethyl-1,2,4,5,7,8-hexaoxonan (Nomenklatur nach dem Hantzsch-Widmann-System) enthielt, und Wasserstoff dosiert.

In Vergleichsbeispiel V1 erfolgte die Polymerisation ohne 3,6,9-Trimethyl-3,6,9-triethyl-1,2,4,5,7,8-hexaoxonan; in Vergleichsbeispiel V2 wurde als Peroxid-Mischung 2 reines 3,6,9-Trimethyl-3,6,9-triethyl-1,2,4,5,7,8-hexaoxonan verwendet. In Vergleichsbeispiel V3 wurde zwar mit einem Gemisch, enthaltend 3,6,9-Trimethyl-3,6,9-triethyl-1,2,4,5,7,8-hexaoxonan, initiiert, aber kein Wasserstoff zugesetzt.

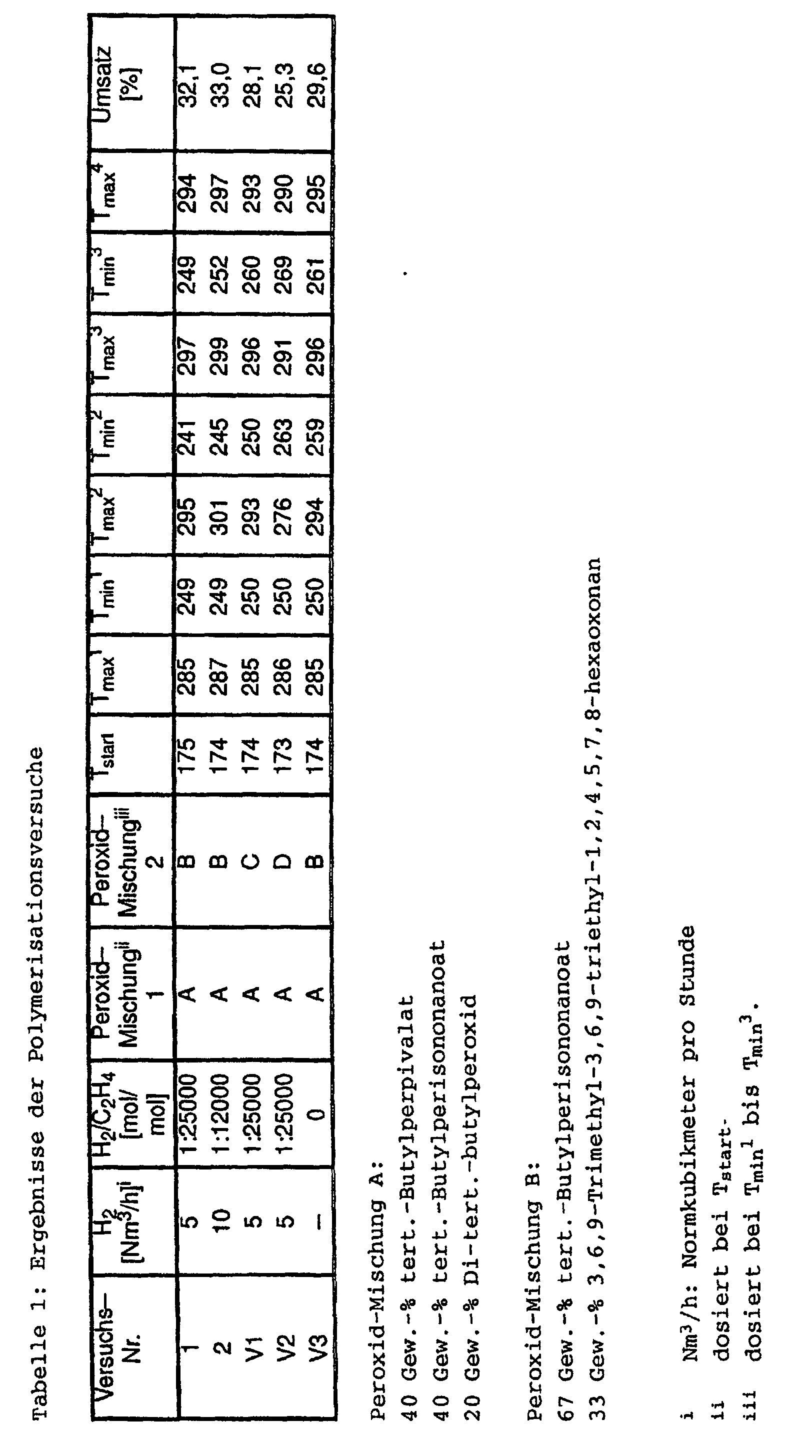

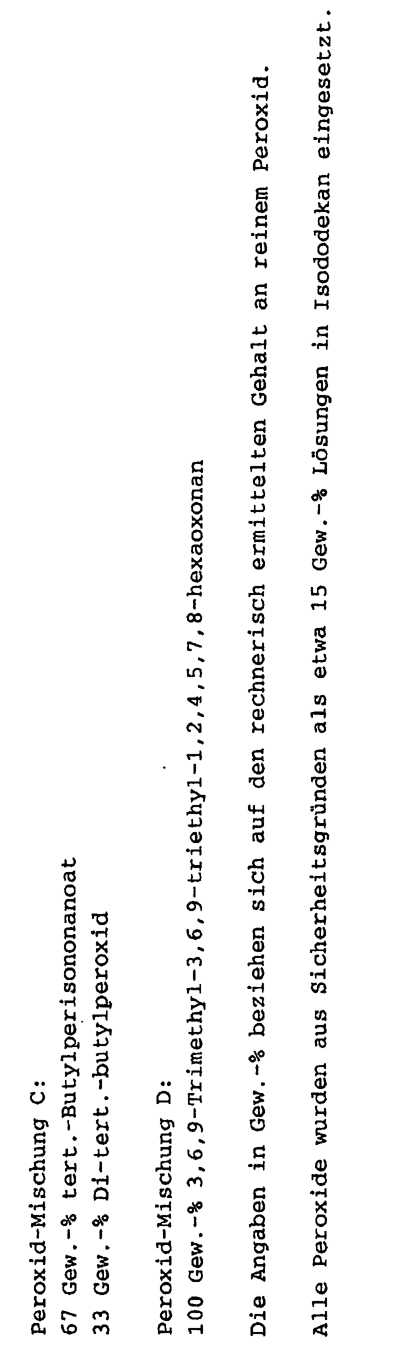

## Patentansprüche

1. Verfahren zur Herstellung von Polyethylenwachsen bei Temperaturen von 200 bis 350°C und Drucken im Bereich von 500 bis 4000 bar unter Verwendung von Molmassenreglern, **dadurch gekennzeichnet, dass** man als Radikalstarter ein Peroxidgemisch einsetzt, das im Bereich von 5 bis 95 Gew.-% mindestens eines cyclischen Peroxids der Formel I enthält, 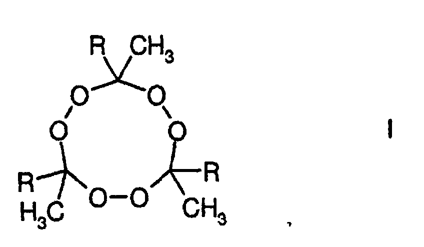 wobei die Reste R gleich oder verschieden sind und aus Alkylgruppen oder Arylgruppen ausgewählt werden, und dass man ferner ein molares H₂/Ethylen-Verhältnis von 1:2000 bis 1:40000 einsetzt.

2. Verfahren gemäß Anspruch 1, **dadurch gekennzeichnet, dass** man ein molares H₂/Ethylen-Verhältnis von 1:5000 bis 1:25000 einsetzt.

3. Verfahren gemäß den Ansprüchen 1 bis 2, **dadurch gekennzeichnet, dass** die Reste R aus linearen C₁-C₈-Alkylgruppen ausgewählt werden.

4. Verfahren gemäß den Ansprüchen 1 bis 3, **dadurch gekennzeichnet, dass** alle Reste R Ethyl bedeuten.

5. Verfahren gemäß den Ansprüchen 1 bis 4, **dadurch gekennzeichnet, dass** man Ethylen mit einem oder mehreren radikalisch copolymerisierbaren Olefinen polymerisiert, bevorzugt ausgewählt aus 1-Olefinen, Acrylsäure, Acrylsäureestern, Methacrylsäure, Methacrylsäureestern, Vinylcarboxylaten, ungesättigten Dicarbonsäuren und Derivaten ungesättigter Dicarbonsäuren.

## Claims

1. A process for preparing polyethylene waxes at from 200 to 350°C and pressures in the range from 500 to 4 000 bar using molar mass regulators, wherein a peroxide mixture comprising from 5 to 95% by weight of at least one cyclic peroxide of the formula I, 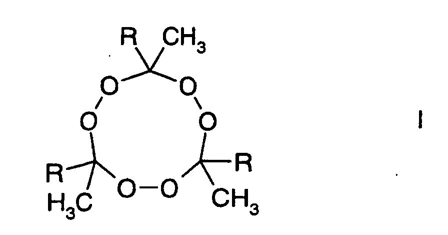 where the radicals R are identical or different and are selected from among alkyl groups and aryl groups, is used as free radical initiator and a molar H₂/ethylene ratio of from 1:2 000 to 1:40 000 is employed.

2. A process as claimed in claim 1, wherein a molar H₂/ethylene ratio of from 1:5 000 to 1:25 000 is employed.

3. A process as claimed in claim 1 or 2, wherein the radicals R are selected from among linear C₁-C₈-alkyl groups.

4. A process as claimed in any of claims 1 to 3, wherein all radicals R are ethyl.

5. A process as claimed in any of claims 1 to 4, wherein ethylene is copolymerized with one or more oliefins which can be copolymerized by a free radical mechanism, preferably selected from among 1-olefins, acrylic acid, acrylic esters, methacrylic acid, methacrylic esters, vinyl carboxylates, unsaturated dicarboxylic acids and derivatives of unsaturated dicarboxylic acids.

## Revendications

1. Procédé de préparation de cires de polyéthylène, à une température comprise entre 200°C et 350°C et à une pression comprise entre 500 bars et 4 000 bars, en employant des régulateurs de masse molaire, **caractérisé en ce que** l'on met en oeuvre, en tant qu'amorceur radicalaire, un mélange de peroxyde contenant, à raison de 5% à 95% en poids, au moins un peroxyde cyclique de formule I 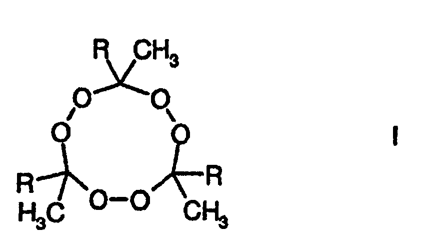 où les restes R sont identiques ou différents et choisis parmi les groupes alkyles ou aryles, et **caractérisé en outre en ce que** l'on met en oeuvre de l'hydrogène et de l'éthylène dans une proportion molaire comprise entre 1:2000 et 1:40000.

2. Procédé selon la revendication 1, **caractérisé en ce que** l'on met en oeuvre de l'hydrogène et de l'éthylène dans une proportion molaire comprise entre 1:5000 et 1:25000.

3. Procédé selon les revendications 1 et 2, **caractérisé en ce que** l'on choisit les restes R parmi les groupes alkyle linéaires en C₁ à C₈.

4. Procédé selon les revendications 1 à 3, **caractérisé en ce que** tous les restes R représentent un reste éthyle.

5. Procédé selon les revendications 1 à 4, **caractérisé en ce que** l'on polymérise l'éthylène avec une ou plusieurs oléfines qui sont copolymérisables par voie radicalaire et que l'on choisit de préférence dans le groupe formé par les 1-oléfines, l'acide acrylique, les esters de l'acide acrylique, l'acide méthacrylique, les esters de l'acide méthacrylique, les carboxylates vinyliques, les acides dicarboxyliques insaturés et les dérivés d'acides dicarboxyliques insaturés.
